(19) Europäisches Patentamt / European Patent Office / Office européen des brevets

(11) EP 4 635 622 A1

(12) **EUROPEAN PATENT APPLICATION**

(43) Date of publication:
**22.10.2025 Bulletin 2025/43**

(21) Application number: **24170863.5**

(22) Date of filing: **17.04.2024**

(51) International Patent Classification (IPC):
***B01J 21/06*** (2006.01) ***B01J 23/10*** (2006.01)
***B01J 35/40*** (2024.01) ***B01J 35/51*** (2024.01)
***B01J 37/00*** (2006.01) ***B01J 37/02*** (2006.01)
***B01J 37/06*** (2006.01) ***B24B 31/14*** (2006.01)
***B29B 17/04*** (2006.01) ***C08J 11/16*** (2006.01)

(52) Cooperative Patent Classification (CPC):
**B01J 23/10; B01J 21/066; B01J 35/40; B01J 35/51; B01J 37/0221; B01J 37/06; B24B 31/14; B29B 17/04; C08J 11/16;** B01J 35/53; B01J 37/0045

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Universiteit Utrecht Holding B.V.**
**3584 CS Utrecht (NL)**

(72) Inventors:
- **VOLLMER, Ina**
  **3584 CS Utrecht (NL)**
- **HERGESELL, Adrian Henrik**
  **3584 CS Utrecht (NL)**
- **BAARSLAG, Renate Johanna**
  **3584 CS Utrecht (NL)**

(74) Representative: **V.O.**
**P.O. Box 87930**
**2508 DH Den Haag (NL)**

(54) **CATALYTICALLY FUNCTIONALIZED GRINDING MEDIA FOR MECHANOCHEMICAL DEPOLYMERIZATION**

(57) The invention is in the field of mechano-catalysis. Provided is a method of manufacturing grinding media having a catalytically functionalized surface, the method comprising: subjecting grinding media to a catalytic functionalization step. Also provided are grinding media having a catalytically functionalized surface, and a method of depolymerizing plastic material, wherein the plastic material is brought in contact with a mechanical agitating part, and wherein the mechanical agitating part comprises such grinding media.

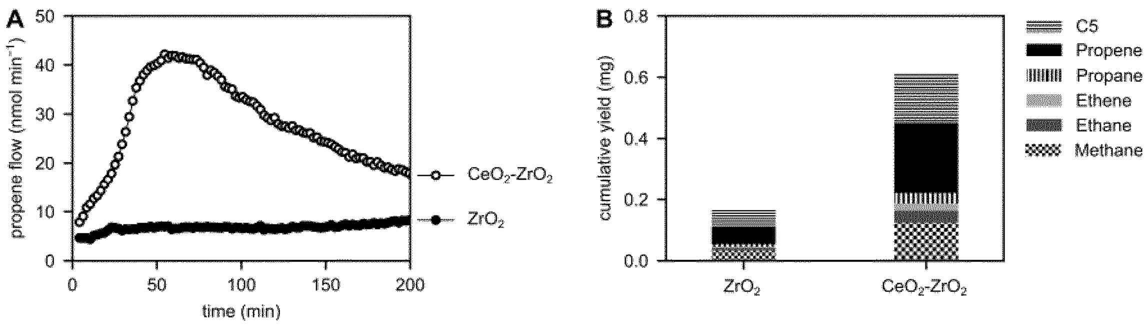


Fig. 2

EP 4 635 622 A1

## Description

### BACKGROUND OF THE INVENTION

The invention is in the field of mechano-catalysis. In particular the present invention is directed to a method of manufacturing grinding media having a catalytically functionalized surface, to grinding media having a catalytically functionalized surface, and to a method of depolymerizing plastic material.

A traditionally used approach to recycling plastic waste material is mechanical recycling. However, mechanical recycling of plastic waste materials is typically accompanied by degraded plastic properties. An example method of mechanical recycling is based on melting and re-extrusion of the plastic material.

Vollmer et al., Angew. Chem. Int. Ed. 2020, 59, 15402-15423, review various approaches to chemical recycling of plastic materials. Chemical recycling of plastic, i.e. polymeric, materials is generally directed to the conversion of plastic waste material into monomers and oligomers. One class of chemical recycling methods is based on (catalytic) pyrolysis. This, however, requires high temperatures (e.g. above 400 °C) for polyolefins such as polypropylene (PP) and polyethylene (PE). Furthermore thermal pyrolysis is typically unselective. Vollmer et al., Angew. Chem. Int. Ed. 2021, 60, 16101-16108, describe polyolefin plastic waste conversion to aromatics using an industrial Fluid Catalytic Cracking catalyst.

There remains a desire for more selective methods and equipment for the conversion of plastic materials into desired compounds, and in particular for mechanochemical recycling methods for plastic waste materials having higher selectivity, and equipment therefor.

### BRIEF SUMMARY OF THE INVENTION

According to a first aspect of the invention, there is provided a method of manufacturing grinding media having a catalytically functionalized surface, the method comprising: subjecting grinding media to a catalytic functionalization step.

According to a second aspect of the invention, grinding media having a catalytically functionalized surface are provided. Advantageously, the grinding media may be obtainable by the method according to the first aspect.

There is also provided a method of depolymerizing plastic material, in particular plastic waste material, wherein the plastic material is brought in contact with a mechanical agitating part. The mechanical agitating part comprises grinding media according to the second aspect and/or may be provided using the method according to the first aspect.

The inventors found that subjecting grinding media to a catalytic functionalization step results in grinding media which can advantageously be used for improved mechanochemical recycling of plastic material. Without wishing to be bound by theory, the inventors believe that catalytic functionality on the surface of the grinding media, resulting from subjecting the grinding media to a catalytic functionalization step, contributes to improved mechanochemical activity of the grinding media because of the presence of catalytic sites at the impact zone of the grinding media.

### BRIEF DESCRIPTION OF THE DRAWINGS

Figure 1 shows EPR spectra of ceria-zirconia powder and acid-etched zirconia.

Figure 2 shows depolymerization results of polypropylene for ceria-zirconia grinding spheres.

Figure 3 shows depolymerization results of polypropylene for high-temperature alkali-etched $ZrO_2$ grinding spheres.

Figure 4 shows depolymerization results of polypropylene, polyethylene, and polystyrene for high-temperature acid-etched $ZrO_2$ grinding spheres.

Figure 5 shows depolymerization results of polypropylene for sandblasted $ZrO_2$ grinding spheres.

Figure 6 shows TGA profiles of polypropylene with and without grinding spheres.

Figure 7 shows depolymerization results of polypropylene for ceria-zirconia and acid-etched zirconia grinding spheres with and without a radical quencher.

### DETAILED DESCRIPTION OF THE INVENTION

The invention provides the approach of catalytically functionalizing the surface of equipment parts used for mechanically agitating material, in particular functionalizing the surface of grinding media. More broadly, the surface of equipment parts used for mechanically agitating material are functionalized with a functionality with chemical activity.

Accordingly, there is provided a method of manufacturing grinding media having a catalytically functionalized surface.

The method comprises subjecting the grinding media to a catalytic functionalization step.

In embodiments, the equipment parts used for mechanically agitating material are grinding media, for example for ball milling. The catalytic functionalization step may involve bulk treatment and/or surface treatment of the grinding media.

The equipment parts used for mechanically agitating material, e.g. grinding media, may be elements or reactor parts that move when in use, such as milling balls, a stirrer, an extrusion screw, a grinding disc, a grinding wheel. Additionally or alternatively, the equipment parts used for mechanically agitating material, e.g. grinding media, may be stationary, such as a reactor wall.

The catalytic functionalization step involves treatment providing catalytic functionality to the grinding media, in particular to the surface of the grinding media.

Without limitation, the catalytic functionalization step or treatment providing the functional groups or functionalities to the grinding media may involve depositing catalytically active material (e.g. in the form of (nano) particles and/or functional groups) on the surface of the grinding media and/or treatment to introduce catalytic functionality to the material of the grinding media.

The term 'functional group' is used broadly and can also refer to, e.g. metal based particles or ions, and can also be referred to as 'functionality'.

The catalytic functionalization step may be chosen depending on the desired functionality of the grinding media, which may depend on the reaction mechanism of a mechanochemical reaction in which the grinding media are to be used.

The catalytic functionalization step may for instance be chosen such that the grinding media comprise functionalities exhibiting:

- redox and/or radical functionality, e.g. unpaired electrons,
- Bronsted acidity and/or Lewis acidity, e.g. solid acids,
- solid base activity, e.g. basic sites,
- (de-)hydrogenation activity,
- or combinations thereof.

Without wishing to be bound by theory, the inventors believe that in the mechanochemical depolymerization of plastic, radicals are generated by mechanical milling, and that for this purpose, manufacturing grinding media with catalytic functionality that increases interaction of the grinding media with these radical intermediates is particularly advantageous. Therefore, the catalytic functionalization step preferably comprises the formation of catalytically active sites that can interact with radicals and/or that have redox functionality.

The inventors believe that such catalytic functionality based on interactions with radicals can be provided by metal compounds, such as metal oxides, metal sulfides, metal phosphides, metal carbides, and metal nitrides. Therefore, prior to and/or after the functionalization step, the outer surface and/or bulk of the grinding media preferably comprises a metal compound.

In particular, defects in metal compounds (e.g. metal oxides) such as partially reduced metal species, surface defects and/or oxygen vacancies may provide the desired interaction with mechano-radicals.

The term 'partially reduced metal species', as used herein, refers to a defect in a metal compound in which a metal species has a lower oxidation state than its common oxidation state in that metal compound. For instance, in respectively $ZrO_2$ and $CeO_2$, $Zr^{3+}$ and $Ce^{3+}$ are partially reduced metal species.

Preferably, the outer surface and/or bulk of the grinding media comprises a metal oxide. The metal oxide may be crystalline and/or amorphous. Preferred metal oxides are metal oxides in which defects as described above are present, or can be created by treating the metal oxide. Preferably, the metal oxide is selected from $ZrO_2$, $CeO_2$, $V_2O_5$, $TiO_2$, $Ga_2O_3$, ZnO, $In_2O_3$, iron oxides, manganese oxides, molybdenum oxides, tungsten oxides, and combinations thereof. In specific embodiments, the surface and/or bulk of the grinding media comprises zirconia, because of the mechanical stability of this oxide and the possibilities to create defects, such as partially reduced $Zr^{3+}$ species.

In case the grinding media comprise metal oxide material prior to the catalytic functionalization step, the catalytic functionalization step may advantageously comprise creation of defects in the metal oxide material by surface and/or bulk treatment of the grinding media. Preferably, the defects comprise oxygen vacancies and/or partially reduced metal species. Particularly preferred of oxygen vacancies are F-centers, *i.e.,* anionic vacancies in a crystalline oxide lattice, occupied by one or more unpaired electrons.

The inventors believe that defects in metal oxide materials result in redox-active species that can interact with mechano-radicals which are generated by mechanical forces, for instance in mechanochemical depolymerization of plastics. For instance, oxygen vacancies in a meal oxide may result in partially reduced metal species, such as $M^{3+}$ in metals with a common oxidation state of +4 (e.g. M = Zr, Ce). Such partially reduced metal species could stabilize free mechano-radicals as follows:

$$M^{3+} + \cdot\mathrm{R} \rightleftharpoons M^{4+}\text{–}\mathrm{R}$$

to an extent where the concentration of radicals in the bulk is significantly lowered and their termination by combination or disproportionation is hampered. It is proposed that this leads to a longer lifetime of these critical intermediates during depolymerization and causes higher product flows. Furthermore, stabilized intermediates could exhibit a different reactivity from free radicals, thus altering the depolymerization selectivity.

Methods that can be applied to create defects in metal oxide materials are described in the scientific literature, for instance in Kofstad, Oxidation of Metals 1995, 44, 3-27 and Aggarwal et al., Annual Review of Materials Research 1998, 28, 463, the contents of which are incorporated herein by reference.

The functionalization step may comprise mechanical, chemical and/or physical treatments to the surface of metal oxide grinding media, thereby creating surface defects. Examples of mechanical treatments that may be used to create surface defects include mechanical abrasion (such as sandblasting, scratching, grinding, cutting, hammering). Chemical treatments that may be

used to create surface defects include chemical etching (for instance using strong acids (e.g., $H_2SO_4$, $H_3PO_4$, HCl, HNOs) and/or bases (e.g., NaOH, KOH) and/or molten salts (e.g., NaCl, KCl), and partial reduction using a reducing agent (e.g., $H_2$, $LiAlH_4$, $NaBH_4$). Physical treatments that may be used to create surface defects include vacuum treatment (e.g. high temperature vacuum treatment), laser ablation, and electron beam irradiation.

In addition to creating catalytically active sites, some surface treatments may additionally provide the grinding media with surface roughness, resulting in improved mechanical grinding abilities of the grinding media. For instance, in case of plastic depolymerization, surface roughness can mechanically disturb the plastic by "ripping apart" the polymer chains. This surface roughness may advantageously be created by mechanical and chemical surface treatments such as sandblasting and etching.

Alternatively or additionally to creating surface defects, metal oxide media can also be subjected to treatments that create defects (such as oxygen vacancies, and/or partially reduced metal species) in the bulk of the material that cause catalytic activity at the surface. The advantage of such bulk defects is that the material may still be active even after attrition. Approaches for creating bulk defects in metal oxides include UV treatment and electron beam irradiation of the metal oxide.

Alternatively or additionally, the functionalization step can also comprise immobilizing a catalytically active metal oxide on the outer surface of the grinding media. This can for instance be done by subjecting the outer surface of the grinding media to one or more metal oxide precursors, followed by an optional treatment (e.g. calcination and/or reduction) to immobilize the metal oxide to the surface. The immobilization of the metal oxide may also involve chemical reaction of the one or more metal oxide precursors with each other and/or with the outer surface of the grinding media, thereby forming a mixture of metal oxides or deposition using vaporized precursors. In an embodiment, the functionalization step comprises subjecting grinding media, for instance but not necessarily grinding media with a metal oxide (e.g. zirconium oxide) outer surface, to a cerium oxide precursor (e.g. a cerium nitrate) and a zirconium oxide precursor (e.g. zirconium oxynitrate), followed by calcination, resulting in a mixture of zirconium oxide and cerium oxide immobilized on the surface of the grinding media.

In the treatments described above, conditions such as temperature, pressure, and duration of the treatment needed to achieve catalytic functionalization may depend on the specific metal oxide and/or other reactants (e.g. etchant, reducing agent, metal oxide precursor) used. It will be understood that the skilled person may verify if catalytic functionalization is achieved by characterization of the obtained grinding media (for instance using EPR as described below) and/or by using the obtained grinding media in a test reaction (e.g. depolymerization of plastic material).

In embodiments, the functionalization step comprises etching of grinding media with a $ZrO_2$ outer surface using an acid (e.g. $H_2SO_4$), at an appropriately high temperature, preferably a temperature of 675 °C or higher, more preferably 700 °C or higher, such as 750 °C or higher or 800 °C or higher. In further embodiments, the functionalization step comprises etching of grinding media with a $ZrO_2$ outer surface using a base (e.g. NaOH) at an appropriately high temperature, preferably a temperature of 650 °C or higher, preferably 700 °C or higher, such as 750 °C or higher or 800 °C or higher.

Alternatively or in addition to the redox functionalization described above, the catalytic functionalization step may further provide the grinding material with solid acid functionality, in particular, Bronsted acid and/or Lewis acid, functionality, in particular of the surface of the grinding media; more preferably both Bronsted acid and Lewis acid functionality, e.g. by sulfating or other treatment of metal oxide grinding media. Such solid acid functionality is particularly advantageous catalyzing cracking reactions. Solid acid functionality may be provided by sulfated metal oxides; or sulfated metal nitride, metal sulfide, metal phosphide, or metal carbide. This may provide for strong acid catalytic functionality. For instance, sulfated $ZrO_2$, $Fe_2O_3$, $TiO_2$, $SiO_2$, or $Al_2O_3$ can be used, though other sulfated metal oxides are also possible; as well as sulfated metal nitride, or metal carbide, or metal sulfide, metal phosphide.

In specific embodiments, the catalytic functionalization involves at least one functionalization treatment other than sulfation of metal oxide grinding media with sulfuric acid and other than functionalization of metal oxide grinding media with tungsten oxide species.

As described above, partially reduced metal species with unpaired electrons (such as $Ce^{3+}$ or $Zr^{3+}$) within the surface of the grinding media could enhance interactions with mechano-radicals and can be considered active species providing the grinding media with catalytic functionality. Electron paramagnetic resonance (EPR) spectroscopy is highly sensitive in detecting species with unpaired electrons and can be used to investigate the synthesized ceria-zirconia material.

Therefore, the catalytic functionalization step increases the concentration of unpaired electrons in the grinding media, preferably as measured by EPR measurement, more preferably by EPR measurement method as used in example 5. In embodiments, the concentration of unpaired electrons as measured by EPR is higher after the catalytic functionalization step than before.

Integration of EPR spectra could be used as an optional lower limit indicative of at least some effective catalytic functionalization. By integration of the EPR signal, the concentration of unpaired electrons can be determined.

More broadly, the density of unpaired electrons on the outer surface of the grinding media, could, optionally, be at least 0.1 pmol/$cm^2$, or at least 0.5 pmol/$cm^2$, or at least 1.0 pmol/$cm^2$. This density could be measured by measuring a sample with a thickness of 10 $\mu$m taken from the outer surface of grinding media. These optional densities of unpaired electrons on the outer surface of the grinding media optionally are specified as features of all aspects of the invention, in particular to the grinding media having a catalytically functionalized surface as discussed below.

As used herein, the method of manufacturing may refer to the initial manufacturing of grinding media, but also to regeneration of grinding media of which the catalytic functionality is at least partially spent. In such cases, the functionalization step may be performed on spent or partially spent catalytically active grinding media.

The manufacturing method can also be referred to as a method of preparing grinding media or a method of treating grinding media. The prepared grinding media can be used in the inventive method of depolymerizing plastic material.

According to the invention, there is also provided grinding media having a catalytically functionalized surface.

Advantageously, the grinding media having a catalytically functionalized surface may be obtainable and/or obtained by the method of manufacturing grinding media described above. It will be understood that, features described for the grinding media having a catalytically functionalized surface may analogously apply to the method of manufacturing grinding media, and vice versa.

Preferably, the catalytically functionalized surface of the grinding media is a metal oxide surface having defects, particularly bulk defects and/or surface defects. The defects may comprise one or more selected from oxygen vacancies, preferably F-centers, partially reduced metal species, and surface roughness.

In embodiments, the grinding media exhibit at least one functionality other than provided by $SO_4$ functional groups on the surface of the grinding media and other than provided by tungstated zirconia.

The grinding media has, for example, a density of at least 3.0 g/$cm^3$ or at least 4.0 g/$cm^3$ (solid bulk density), higher values are also possible. The grinding media solid objects for example, without limitation, have a smallest dimension of at least 1.0 mm or at least 5.0 mm. For instance, grinding balls may have a diameter of e.g., 20 mm to 150 mm.

In preferred embodiments, the grinding media comprises, or substantially consists, e.g., for more than 90 wt.% of, e.g., zirconia, alumina, steel, and/or tungsten carbide. Other materials are also possible. In some embodiments, the grinding media comprises, e.g., for at least 90 wt.%, of one or more of metals, metal oxide, metal carbide, and metal nitride. For instance, ceramic materials are suitable; i.e. inorganic, non-metallic oxide, nitride, or carbide material. Ceramic materials may be advantageous as they are often hard, brittle, heat-resistant and corrosion-resistant. In order to provide the desired bulk mechanical properties as well as the desired catalytic properties, the grinding media may be comprise a core surrounded by one or more shells of a different material.

Counter-intuitively, the inventive grinding media with catalytic functionality that can be obtained according to the invention do not require a high specific surface area in order to be effective catalysts. Therefore the grinding media can be non-porous and therefore mechanically stable and resistant against repeated impact, unlike catalysts that are typically used for heterogenous catalytic processes, for instance porous catalyst bodies and catalysts particles on a catalyst support having high porosity.

Also provided is a method of depolymerizing plastic material, in particular plastic waste material, wherein the plastic material is brought in contact with a mechanical agitating part.

The mechanical agitating part comprises equipment parts used for mechanically agitating material, for instance grinding media, as described in the previous aspects. The mechanical agitating part, such as e.g., grinding media, is in particular agitated in contact with the plastic material.

The contacting involves, e.g., ball milling. Ball milling is a size reduction technique that uses grinding media in e.g., a rotating cylindrical chamber, with a substantial horizontal axis of rotation. For example, the method involves ball milling of the plastic material using catalytically functionalized grinding media. In this embodiment the milling balls and the plastic material are in direct contact during the ball milling.

The method comprises in a preferred embodiment introducing the plastic material in a reactor (e.g. a container or vessel, or more broadly a reaction zone) and introducing the grinding media into the reactor, and contacting the plastic material and the grinding media with each other under agitation in the reactor. The step of introducing functionalized grinding media into the reactor can refer to a batch operation and to a step of continuously introducing functionalized grinding media into a continuous reactor. The process for example comprises withdrawal of used grinding media from the reactor, regenerating the grinding media, e.g. by providing the catalytic functionality, and re-introducing the regenerated grinding media. The re-generation step is for example carried out using the inventive preparation methods. Hence, a preferred method involves both the depolymerization method and, separately, regenerating the grinding media using the method of manufacturing as described above; wherein the depolymerization and the regeneration are carried out e.g. in separate reactors. In the invention, the catalytic functionality of the grinding media is preferably not, or not exclusively, formed *in situ* by the contact with the plastic material.

The plastic material comprises at least one polymeric material, for instance at least 90 wt.% of one

or more polymeric materials. The polymeric material is preferable solid at 20 °C and comprises for instance a hydrocarbon based polymer, or for instance an organic polymer. The polymer can be e.g., a homopolymer or copolymer. Mixtures of polymers can also be used. Depolymerization for example refers to a reaction decomposing the polymer to species, e.g. monomers, or oligomers or other compounds, having a lower molecular weight than the polymer. The method may, alternatively or in addition, be referred to as a method for the conversion of a polymeric material into compound with a lower molecular weight.

Plastic waste material is broadly used to indicate non-virgin plastic material. Plastic materials, as used herein, include, synthetically produced compounds that are made from polymers.

Preferably, the plastic (waste) material comprises a polymer with a saturated aliphatic backbone, preferably one or more selected from the group consisting of polyolefins (such as polyethylene, polypropylene, or their mixture), polystyrenes, poly(meth)acrylates, and copolymers thereof, including corresponding multilayer plastic materials made of these polymers. Preferably, the plastic (waste) material comprises at least 10 wt.% of polymers with a saturated aliphatic backbone (e.g. polyolefins), or at least 50 wt.% or at least 70 wt.% or at least 90 wt.%; preferably at least 70 wt.% or at least 90 wt.% of polyethylene or of polypropylene. As shown in the examples, the inventive method can be used advantageously for depolymerization of polyolefins, such as polypropylene, with the targeted formation of monomers and short-chain hydrocarbons. Since the mechanism involves cleavage of the saturated aliphatic backbone, the examples are also indicative for polymers with a saturated aliphatic backbone other than polypropylene.

In further embodiments, the plastic (waste) material may comprise one or more polymers selected from the group consisting of polystyrene, acrylonitrile butadiene styrene copolymer, polyesters, polycarbonates, polyamides, polymethyl(meth)acrylate, or polyvinyl chloride. The material may also comprise, e.g., synthetic rubbers, such as styrene-butadiene rubbers.

The plastic (waste) material may optionally comprise additives, such as, e.g., colorants, stabilizers, plasticizers, lubricants and flame retardants, nucleating agents, compatibilizers, impact modifiers, rheology modifiers, processing aids, and antimicrobial additives, among others. Optionally, the plastic (waste) may further comprise fillers, residual catalyst and/or initiator. In particular in case of plastic waste material, the material may comprise one or more of said additives and further components. The plastic material, in particular plastic waste material, may also comprise two or more types of polymers.

In some embodiments of the inventive method, the depolymerization is carried out at a temperature above the glass transition temperature ($T_g$) of the plastic material. Thereby certain embodiments of the method depart from prior art methods wherein plastic material is milled below the glass transition temperature of the plastic material. However, it is also possible in the inventive method that the depolymerization is carried out at temperatures below the glass transition temperature. The glass transition temperature is determined using e.g., differential scanning calorimetry according to, e.g., ISO 11357-2:2020.

In embodiments of the inventive method, the depolymerization is performed at a temperature for example above -196 °C and/or below 600 °C, such as a temperature below 400 °C, or up to 300 °C, such as 0 °C to 300 °C, such as, e.g., from 20 °C to 250 °C or to 300 °C; for instance for PP and PE. Preferably, the depolymerization is performed below the melting point of the plastic material. The reaction may in particular be performed below the (non-catalytic) thermal cracking temperature of the polymer.

The depolymerization generally involves cleavage reactions and may involve, e.g., homolytic cleavage, cracking, or e.g., hydrogenolysis (cleavage using hydrogen as reactant), hydrolysis (cleavage using water as reactant), or combinations thereof. The catalytic functionalization is for example to provide catalytic functionality to one or more of these reactions. Preferably, the depolymerization comprises at least homolytic cleavage resulting in radical intermediates. Depolymerization involving homolytic cleavage resulting in radical intermediates may also be referred to as radical mediated depolymerization.

The method of depolymerizing plastic material permits for solvent-free operation in preferred embodiments, e.g., using less than 10 vol.% or less than 1.0 vol.% solvent, relative to plastic material, or without solvent.

The high shear and vigorous movement of the grinding media may help to avoid clogging of the reactor. Such clogging can occur in comparative fluidized bed reactors, in particular because of the high viscosity of the molten plastic material. The vigorous movement of the grinding media may also contribute to a more even temperature profile of the reactor, which is important because the thermal conductivity of plastic is relatively low.

The method of the invention furthermore advantageously permits for easy recovery of the catalyst from the product, in particular from a gaseous product stream. Accordingly, the grinding media can be easily kept in a batch or continuous reactor. The grinding media may also provide for maintaining the structural integrity of the catalytic component during the mechanochemical process.

The use of a surface modification to impart catalytic functionality furthermore permits advantageous regeneration of the catalyst in case of, e.g. attrition or catalyst deactivation. For instance, the method may involve separating spent (i.e. used) grinding media from the reaction mixture (e.g. by withdrawal of the reaction

mixture from a reaction zone) and subjecting the spent (used) grinding media to regeneration, e.g., by the process used for catalytic functionalization of the grinding media. In contrast to spent, or partially spent, grinding media, grinding media having a catalytically functionalized surface produced by the method of manufacturing as described herein can also be referred to as "fresh" grinding media.

Subjecting the spent (used) grinding media to regeneration may advantageously be performed using the method of manufacturing grinding media having a catalytically functionalized surface according to the first aspect of the invention. Therefore, the method of manufacturing grinding media as described herein can also be referred to as a method of regenerating grinding media.

EXAMPLES

The invention will now be further illustrated by the following nonlimiting examples. These examples do not limit the invention and do not limit the claims.

In examples 1-4, grinding media were subjected to different catalytic functionalization steps. Commercial 3 mm or 10 mm (Laarmann or Zhonglong Materials) $ZrO_2$ grinding spheres were used.

**Example 1 - synthesis of ceria-zirconia grinding spheres**

Commercial 3 mm or 10 mm $ZrO_2$ grinding spheres were provided. Pre-treatment with NaOH was performed by heating commercial grinding spheres and NaOH (Merck, 99%, enough for all spheres to be fully submerged in molten NaOH) in a crucible to 425 °C for 3 h (heating rate: 2 °C $min^{-1}$) in static air. After cooling to room temperature, the NaOH was removed by solubilizing it in deionized water, and the grinding spheres were washed with deionized water until pH neutrality and dried in air. The pretreated spheres were put into a solution of 1.0 g $Ce(NO_3)_3 \cdot 6H_2O$ (Thermo Scientific, 99.5%) and 0.53 g $ZrO(NO_3)_2 \cdot xH_2O$ (Sigma-Aldrich, 99%) (molar ratio of 1:1) in 40 g water. Subsequently, 4 g of urea (Sigma-Aldrich, ACS reagent, 99.0-100.5%) were added. Under stirring, the mixture was heated at 100 °C for 2 h. Then, 10 drops of $NH_4OH$ (Merck, 25% solution in water) were added under stirring to ensure complete precipitation. Afterwards, the spheres and powder were collected separately and used further: The spheres were dried for 1 h at 120 °C and calcined at 600 °C for 4 h (heating rate: 2 °C $min^{-1}$) in static air. The powder was filtered under vacuum, dried for 1 h at 120 °C and calcined at 600 °C for 4 h (heating rate: 2 °C $min^{-1}$) in static air.

**Example 2 - synthesis of high-temperature alkali-etched grinding spheres**

Commercial 10 mm $ZrO_2$ grinding spheres were provided. Etching with NaOH was performed by heating commercial grinding spheres and NaOH (Merck, 99%, enough for all to be fully submerged in molten NaOH) in a crucible to 800 °C for 3 h (heating rate: 2 °C $min^{-1}$) in static air. After cooling to room temperature, the NaOH was removed by solubilizing it in deionized water, and the grinding spheres were washed with deionized water until pH neutrality and dried in air.

**Example 3 - synthesis of high-temperature acid-etched grinding spheres**

Commercial 10 mm $ZrO_2$ grinding spheres were provided. Etching with $H_2SO_4$ was performed by placing grinding spheres individually into cylindrical quartz cups (internal diameter of 12 mm, height of 17 mm) and submerging them in 0.8 ml $H_2SO_4$ (VWR, 95%) each. The cups were placed inside a quartz tube (internal diameter of 28 mm, length of 67 cm) in a tubular oven (Thermolyne 79300 Tube Furnace, flow of 100 ml $min^{-1}$ synthetic air) and heated to 800 °C for 2 h (heating rate: 5 °C $min^{-1}$). After cooling to room temperature, the grinding spheres were separated from the residual powder in the cup. The spheres were washed with deionized water until pH neutrality and dried in air, while the powder was collected for further analyses.

**Example 4 - synthesis of sandblasted grinding spheres**

Commercial 10 mm $ZrO_2$ grinding spheres were provided and sandblasted for 1 min with brown fused alumina particles (FEPA F40, ca. 400 pm) using a ZionAir SBC990 sandblaster at 6 bar.

**Example 5 - Electron paramagnetic resonance (EPR)**

Electron paramagnetic resonance (EPR) measurements were performed in order to detect partially reduced species with unpaired electrons. EPR measurements at 99 K were performed in continuous wave on an X-band Bruker EMXplus instrument at a microwave frequency of ca. 9.4 GHz. The measurements were performed using a modulation amplitude of 1 G and a modulation frequency of 100 kHz. The shown EPR spectra are normalized by sample mass in the cavity. Since 3 and 10 mm spheres did not fit into the EPR tubes, model powders were used. For ceria-zirconia (example 1), the powder that is usually immobilized on zirconia spheres was used. For high-temperature acid-etched zirconia (example 3), residual powder that was etched off the spheres during synthesis was used.

The EPR spectrum of catalyst powder prepared according to example 1 is shown in figure 1A. Assuming a 10 micrometer layer of immobilized powder on a 10 mm sphere, a density of unpaired electrons on the outer surface of the sphere of 2 pmol/$cm^2$ could be estimated.

The EPR spectrum of catalyst powder prepared according to example 3 is shown in figure 1B.

**Example 6** - **Depolymerization**

In the depolymerization experiments, the grinding media prepared according to examples 1-4 were used for depolymerization of plastic. In these experiments, 2 g polypropylene (PP) pellets (Sigma-Aldrich, $M_n$ = 5,000 g mol$^{-1}$, $M_w$ = 12,000 g mol$^{-1}$, denoted as model PP) or 2 g PE powder (Avient Protective Materials) or 2 g polystyrene pellets (Sigma-Aldrich, $M_n$ = 192,000 g mol$^{-1}$) were loaded into a 25 ml tungsten carbide ball milling container (Retsch) and five grinding spheres with a diameter of 10 mm were used for ball milling experiments. The container with a Teflon seal was closed and shaken using a Retsch MM 500 vario Mixer Mill for a given time at a frequency of 30 Hz when milling PP and polystyrene, and 35 Hz when milling PE. The grinding jar was equipped with 1/8 " gas connections welded to the container. Holes were drilled into the commercial container via electrical discharge machining. In between experiments, the container with gas ports was cleaned with water, acetone, and dried at 110 °C for> 2 h.

Products were eluted from the milling chamber using a flow of 12.5 ml min$^{-1}$ $N_2$ as a carrier gas and internal standard. Product analysis was performed using an online Global Analyser Solutions gas chromatograph (GC). For the detection of $H_2$ and $N_2$, this device was equipped with a thermal conductivity detector (TCD) coupled to a 2 m × 0.32 mm Rtx-1, 3.0u and a 3 m × 0.32 mm Carboxen1010 column. A flame ionization detector (FID) was used for the detection of hydrocarbons ($C_{1-3}$: 3 m × 0.32 mm Rtx-1, 3u column and 15 m × 0.32 mm $Al_2O_3/Na_2SO_4$ column; $C_{4-7}$: 2 m × 0.28 mm MXT-1, 1u column and 14 m × 0.28 mm MXT-1, 1u column; $C_{8-10}$: 2 m × 0.28 mm MXT-1, 0.5u column and 15 m × 0.28 mm MXT-1, 0.5u column). The flow of $N_2$ ($F_{N_2}$ = 12.5 ml min$^{-1}$ = const.) was used as an internal standard to counter the change in total volumetric flow ( $F_{\text{total},i} = \frac{F_{N_2}}{y_{N_2,i}}$ ) caused by product formation. The molar concentration of $N_2$ at each injection during the run ($y_{N_2,i}$) was determined by using the average of the peak areas ($A_{N_2,i}$) of the first three injections prior to start of the reaction after the flow had stabilized.

The molar carbon flow caused by each hydrocarbon ($C_xH_y$) was determined by using the carbon number *x* of the respective hydrocarbon.

$$F_{C_xH_y,i} = y_{C_xH_y,i} \cdot F_{\text{total}} \cdot x$$

The concentration of each hydrocarbon ( $y_{C_xH_y,i} = \frac{A_{C_xH_y,i}}{CF_{C_xH_y,i}}$ ) was determined by the ratio of peak area of this hydrocarbon ($A_{C_xH_y,i}$) and a calibration factor ($CF_{C_xH_y,i}$) determined by injection of a gas mixture with known content. $CF_{C_xH_y,i} = CF_C \cdot x$, with $CF_C$ as the calibration factor normalized by carbon number, which was determined by calibration with methane, ethane, propane, butane, heptane and hexane. An FID response is approximately proportional to the carbon number.

The cumulative yield of a hydrocarbon could be calculated through integration of the molar flow over time (with $M_{C_xH_y}$ being the molecular weight of the hydrocarbon).

$$Y_{C_xH_y}[\text{g}] = \frac{M_{C_xH_y}}{x} \cdot \int_0^{t_{\text{final}}} F_{C_xH_y,i}\, \mathrm{d}t$$

Figures 2-5 show depolymerization results for grinding media prepared according to examples 1-4, respectively, compared to untreated zirconia grinding spheres. Figure 2A shows the propene flow, and figure 2B cumulative $C_{1-5}$ hydrocarbon yields obtained after 200 min of milling PP at 30 Hz with untreated zirconia and grinding spheres prepared according to example 1. Figure 3A shows the propene flow, and figure 3B cumulative $C_{1-5}$ hydrocarbon yields obtained after 60 min of milling PP at 30 Hz with untreated zirconia and grinding spheres prepared according to example 2. Figure 4A shows the propene flow, and figure 4B cumulative $C_{1-5}$ hydrocarbon yields obtained after 60 min of milling PP at 30 Hz with untreated zirconia and grinding spheres prepared according to example 3. Figure 4C shows the ethene flow, and figure 4D cumulative $C_{1-5}$ hydrocarbon yields obtained after 60 min of milling PE at 35 Hz with untreated zirconia and grinding spheres prepared according to example 3. Figure 4E shows the styrene flow, and figure 4F cumulative hydrocarbon yields obtained after 60 min of milling polystyrene at 30 Hz with untreated zirconia and grinding spheres prepared according to example 3. Figure 5A shows the propene flow, and figure 5B cumulative $C_{1-5}$ hydrocarbon yields obtained after 60 min of milling PP at 30 Hz with untreated zirconia and grinding spheres prepared according to example 4.

It can be seen that compared to untreated zirconia, treated zirconia grinding spheres boost the depolymerization of PP, PE and polystyrene to their monomers propene, ethene, and styrene, respectively, and to other short-chain hydrocarbons.

Example 7 - Thermogravimetric analysis

Thermogravimetric analysis (TGA) was performed on the grinding media prepared according to examples 1 and 3, in order to investigate the potential role of catalytically active acid sites in the observed boost in the depolymerization experiments of example 6. TGA measurements were performed on a Perkin Elmer TGA 8000. In a typical experiment, ca. 1-3 mg polymer material and one 3 mm grinding sphere were loaded into a

crucible equipped with a round bottom quartz inlay to allow for better polymer-catalyst contact, and heated from 50 °C to 600 °C using a heating rate of 10 °C $min^{-1}$ under a $N_2$ flow of 45 ml $min^{-1}$. Shown weight loss curves are min-max normalized.

Figure 6 shows TGA curves for model PP without catalyst, with untreated grinding media, with grinding media prepared according to example 1, and with grinding media prepared according to example 3. The fact that no decrease in the temperature at which the weight loss occurs is observed in the presence of grinding media prepared according to examples 1 and 3 indicates that the observed boost in example 6 is likely caused by a different mechanism than acid-catalyzed thermo-catalytic cracking.

Example 8 - Radical quenching experiments

To investigate whether the depolymerization in example 6 proceeds via ionic intermediates occurring over acid sites or via radicals, radical quenching experiments were performed.

These experiments were performed as described for example 6, with the difference that *t*-BHT (pentaerythritol tetrakis-(3,5-di-tert-butyl-4-hydrocinnamate), Sigma-Aldrich, 98%) as a radical quencher was used in addition to 2 g PP.

Figure 7 shows a comparison of depolymerization results using the grinding media prepared according to examples 1 and 3, with and without radical quenching. Figure 7A shows the propene flow, and figure 7B cumulative $C_{1-5}$ hydrocarbon yields obtained after 120 min of milling model PP (Sigma-Aldrich, $M_n$ = 5,000 g $mol^{-1}$, $M_w$ = 12,000 g $mol^{-1}$) and 0.6 g *t*-BHT at 30 Hz with untreated zirconia and grinding spheres prepared according to example 1. Figure 7C shows the propene flow, and figure 7D cumulative $C_{1-5}$ hydrocarbon yields obtained after 60 min of milling high-molecular weight PP (Ducor Petrochemicals, product DuPure G72TF) and 0.2 g *t*-BHT at 30 Hz with untreated zirconia and grinding spheres prepared according to example 3.

The results confirm that the grinding media of example 1 and 3 are radically functionalized and can interact and stabilize radicals formed by mechanochemical action.

## Claims

1. A method of manufacturing grinding media having a catalytically functionalized surface, the method comprising: subjecting grinding media to a catalytic functionalization step.

2. The method according to claim 1, wherein the grinding media is provided as milling balls.

3. The method according to claim 1 or 2, wherein prior to and/or after the functionalization step, the outer surface of the grinding media and preferably also the bulk of the grinding media, comprises a metal oxide.

4. The method according to claim 3, wherein the metal oxide is selected from $ZrO_2$, $CeO_2$, $V_2O_5$, $TiO_2$, $Ga_2O_3$, ZnO, $In_2O_3$, iron oxides, manganese oxides, molybdenum oxides, tungsten oxides, and combinations thereof.

5. The method according to claim 3 or 4, wherein the catalytic functionalization step comprises immobilization of metal oxide on the outer surface of the grinding media by exposing the grinding media to one or more metal oxide precursors.

6. The method according to any one of claims 3-5, wherein the catalytic functionalization step comprises the formation of oxygen vacancies, preferably F-centers, and/or partially reduced metal species in the metal oxide surface and/or bulk.

7. The method according to any one of claims 3-6, wherein the functionalization step comprises one or more treatments selected from high-temperature vacuum treatment, partial reduction, mechanical abrasion, laser ablation, and etching to create surface defects in the metal oxide outer surface.

8. The method according to any one of claims 3-7, wherein the functionalization step comprises one or more treatments selected from UV treatment, and electron beam irradiation of the metal oxide surface and/or bulk.

9. Grinding media having a catalytically functionalized surface.

10. Grinding media according to claim 9, wherein the catalytically functionalized surface is a metal oxide surface having oxygen vacancies and/or partially reduced metal species.

11. Grinding media according to claim 10, wherein the oxygen vacancies and/or partially reduced metal species are provided by surface defects in the metal oxide surface.

12. Grinding media according to claim 10 or 11, wherein the oxygen vacancies and/or partially reduced metal species are provided by defects in the metal oxide bulk.

13. Grinding media according to any one of claims 9-12, wherein the grinding media do not exhibit: a surface comprising a sulfated metal oxide, or a surface comprising tungstated zirconia.

**14.** Grinding media according to any one of claims 9-13, obtainable by the method according to any one of claims 1-8.

**15.** A method of depolymerizing plastic material, in particular plastic waste material, wherein the plastic material is brought in contact with a mechanical agitating part, wherein the mechanical agitating part comprises grinding media according to any one of claims 9-14.

**16.** The method according to claim 15, wherein the method involves depolymerization of a polymer with a saturated aliphatic backbone, preferably one or more selected from the group consisting of polyolefins, polystyrenes, poly(meth)acrylates, and copolymers thereof, and/or wherein the depolymerization is conducted at a temperature below 300 °C.

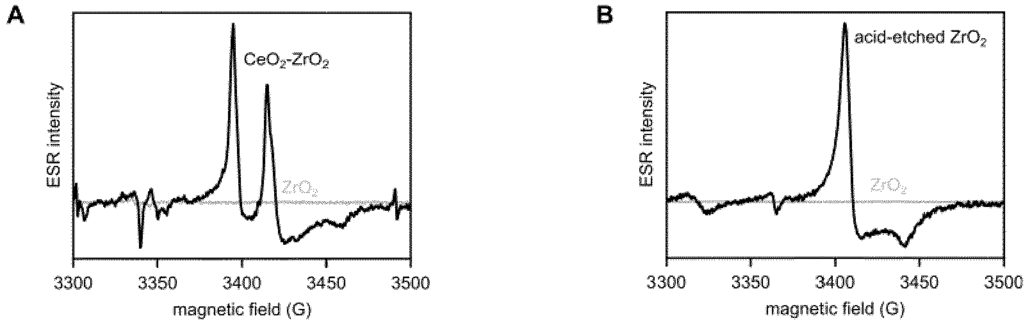


Fig. 1

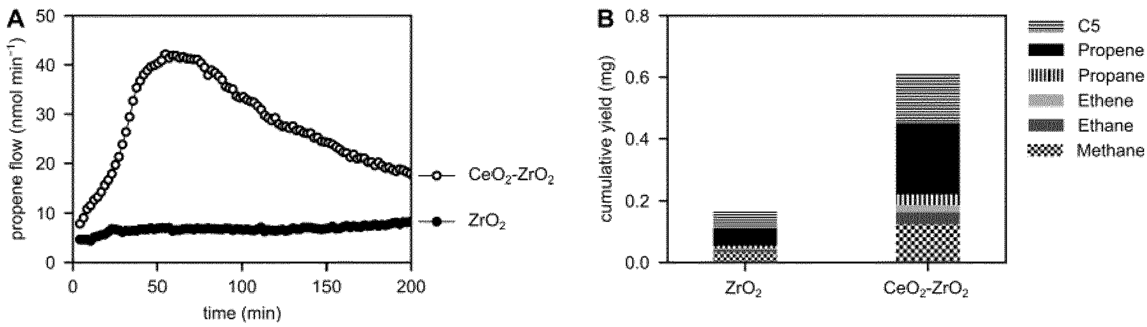


Fig. 2

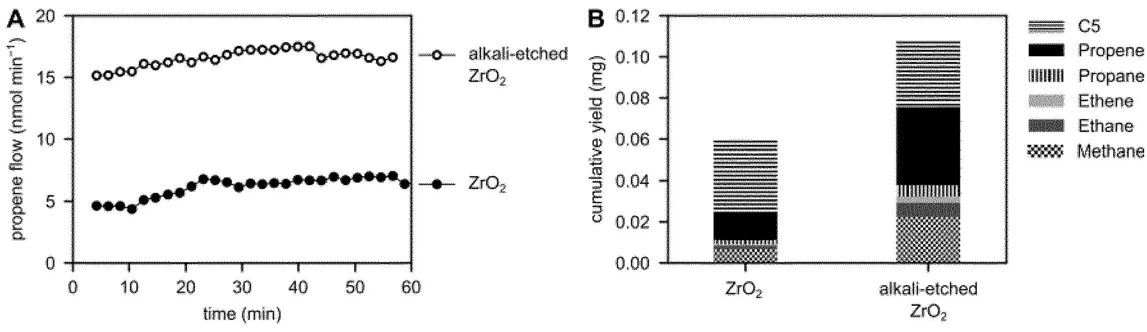


Fig. 3

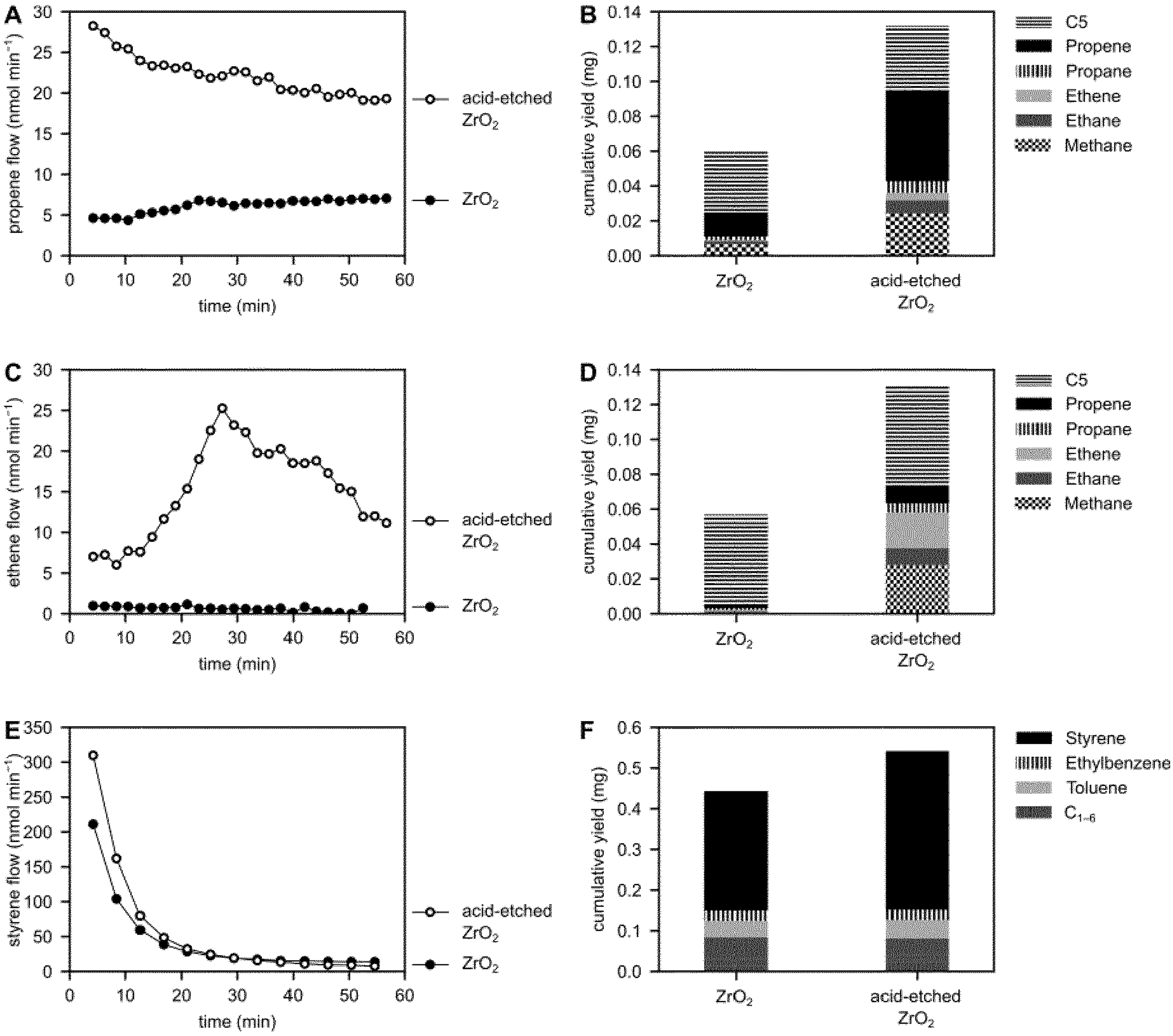
A
propene flow (nmol min⁻¹)
time (min)
acid-etched ZrO2
ZrO2
B
cumulative yield (mg)
C5
Propene
Propane
Ethene
Ethane
Methane
ZrO2
acid-etched ZrO2
C
ethene flow (nmol min⁻¹)
D
E
styrene flow (nmol min⁻¹)
F
Styrene
Ethylbenzene
Toluene
C1-6

Fig. 4

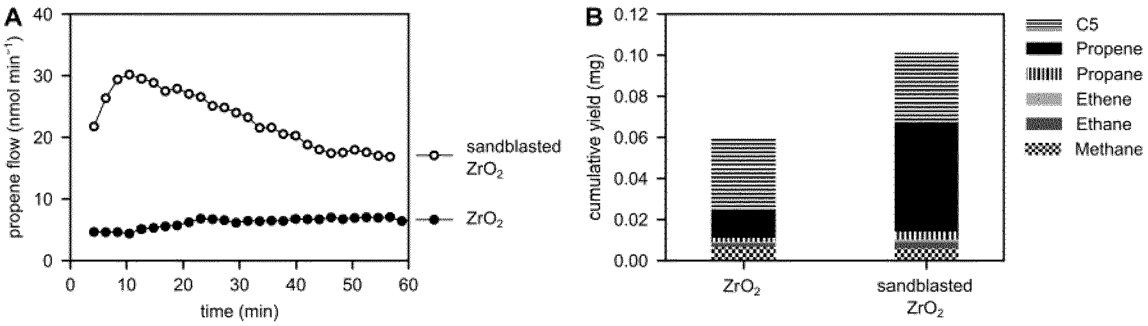
A
propene flow (nmol min⁻¹)
time (min)
sandblasted ZrO2
ZrO2
B
cumulative yield (mg)
C5
Propene
Propane
Ethene
Ethane
Methane
ZrO2
sandblasted ZrO2

Fig. 5

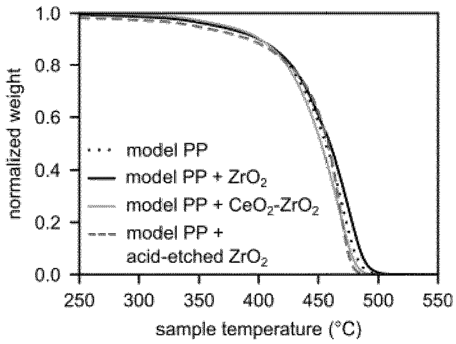
normalized weight
sample temperature (°C)
model PP
model PP + $ZrO_2$
model PP + $CeO_2$-$ZrO_2$
model PP +
acid-etched $ZrO_2$

Fig. 6

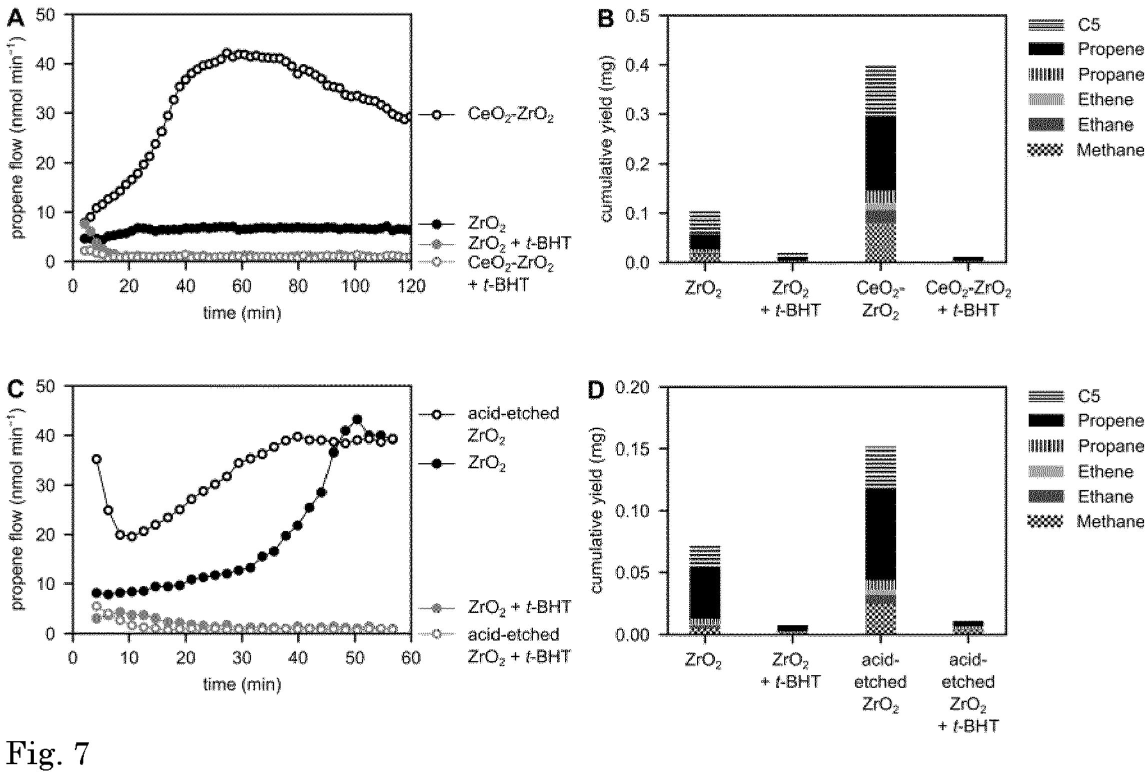
A
propene flow (nmol min$^{-1}$)
time (min)
$CeO_2$-$ZrO_2$
$ZrO_2$
$ZrO_2$ + t-BHT
$CeO_2$-$ZrO_2$
+ t-BHT
B
cumulative yield (mg)
C5
Propene
Propane
Ethene
Ethane
Methane
$ZrO_2$
$ZrO_2$
+ t-BHT
$CeO_2$-
$ZrO_2$
$CeO_2$-$ZrO_2$
+ t-BHT
C
propene flow (nmol min$^{-1}$)
time (min)
acid-etched
$ZrO_2$
$ZrO_2$
$ZrO_2$ + t-BHT
acid-etched
$ZrO_2$ + t-BHT
D
cumulative yield (mg)
C5
Propene
Propane
Ethene
Ethane
Methane
$ZrO_2$
$ZrO_2$
+ t-BHT
acid-
etched
$ZrO_2$
acid-
etched
$ZrO_2$
+ t-BHT

Fig. 7

Europäisches Patentamt
European Patent Office
Office européen des brevets

# EUROPEAN SEARCH REPORT

Application Number
EP 24 17 0863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2024/085753 A1 (UNIV UTRECHT HOLDING BV [NL]) 25 April 2024 (2024-04-25)<br>* page 8, line 27 - page 12, line 3; claims; examples * | 1-6,9-16 | INV.<br>B01J21/06<br>B01J23/10<br>B01J35/40<br>B01J35/51<br>B01J37/00<br>B01J37/02<br>B01J37/06<br>B24B31/14<br>B29B17/04<br>C08J11/16 |
| X | WOHLGEMUTH MAXIMILIAN ET AL: "From Inert to Catalytically Active Milling Media: Galvanostatic Coating for Direct Mechanocatalysis",<br>ANGEWANDTE CHEMIE INTERNATIONAL EDITION, vol. 61, no. 47,<br>19 October 2022 (2022-10-19), XP093207667, Hoboken, USA<br>ISSN: 1433-7851, DOI: 10.1002/anie.202212694<br>Retrieved from the Internet:<br>URL:https://onlinelibrary.wiley.com/doi/full-xml/10.1002/anie.202212694> | 1,2,9, 13,14 | |
| Y | * Results and Discussion; | 1-6,9-16 | |
| A | page 1 - page 2; table 1 * | 7,8 | |
| X | EP 3 757 084 A1 (UNIV RUHR BOCHUM [DE]) 30 December 2020 (2020-12-30) | 1,2,9, 13-15 | TECHNICAL FIELDS SEARCHED (IPC)<br>B01J<br>B29B<br>B24D<br>C08J<br>B24B |
| Y | * paragraph [0063]; claims * | 1-6,9-16 | |
| A | * paragraph [0068] - paragraph [0076] * | 7,8 | |

-/--

The present search report has been drawn up for all claims

| Place of search | Date of completion of the search | Examiner |
|---|---|---|
| Munich | 25 September 2024 | Mauger, Jeremy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

page 1 of 2

Europäisches Patentamt
European Patent Office
Office européen des brevets

# EUROPEAN SEARCH REPORT

Application Number
EP 24 17 0863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHANG YUCHEN ET AL: "Kinetic Phenomena in Mechanochemical Depolymerization of Poly(styrene)", ACS SUSTAINABLE CHEMISTRY & ENGINEERING, vol. 12, no. 1, 8 January 2024 (2024-01-08), pages 178-191, XP093207653, US ISSN: 2168-0485, DOI: 10.1021/acssuschemeng.3c05296 Retrieved from the Internet: URL:https://pubs.acs.org/doi/pdf/10.1021/acssuschemeng.3c05296> * 2. Experimental Section; figure 5 * | 1,2,9, 13-16 | |
| Y | WO 2022/160371 A1 (UNIV FOSHAN [CN]) 4 August 2022 (2022-08-04) * page 4, lines 1-12; claims; examples * | 1-6,9-15 | |
| Y | US 2023/107759 A1 (SIEVERS CARSTEN [US] ET AL) 6 April 2023 (2023-04-06) * claims * | 1-6,9-15 | TECHNICAL FIELDS SEARCHED (IPC) |

The present search report has been drawn up for all claims

1

| Place of search | Date of completion of the search | Examiner |
|---|---|---|
| Munich | 25 September 2024 | Mauger, Jeremy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 24 17 0863

This annex lists the patent family members relating to the patent documents cited in the above-mentioned European search report. The members are as contained in the European Patent Office EDP file on The European Patent Office is in no way liable for these particulars which are merely given for the purpose of information.

25-09-2024

| Patent document cited in search report | Publication date | Patent family member(s) | Publication date |
|---|---|---|---|
| WO 2024085753 A1 | 25-04-2024 | NONE | |
| EP 3757084 A1 | 30-12-2020 | DE 102019117437 A1 | 31-12-2020 |
| | | EP 3757084 A1 | 30-12-2020 |
| WO 2022160371 A1 | 04-08-2022 | CN 112898630 A | 04-06-2021 |
| | | WO 2022160371 A1 | 04-08-2022 |
| US 2023107759 A1 | 06-04-2023 | US 2023107759 A1 | 06-04-2023 |
| | | WO 2021168402 A1 | 26-08-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **VOLLMER et al.** *Angew. Chem. Int. Ed.*, 2020, vol. 59, 15402-15423
- **VOLLMER et al.** *Angew. Chem. Int. Ed.*, 2021, vol. 60, 16101-16108
- **KOFSTAD**. *Oxidation of Metals*, 1995, vol. 44, 3-27
- **AGGARWAL et al.** *Annual Review of Materials Research*, 1998, vol. 28, 463